# EUROPÄISCHE PATENTSCHRIFT

(11) **EP 1 165 854 B1**
(45) Veröffentlichungstag und Bekanntmachung des Hinweises auf die Patenterteilung: **19.11.2003**
(21) Anmeldenummer: 00916843.6
(22) Anmeldetag: 17.02.2000
(51) Int. Cl.: C23C 14/58

(54) **VERFAHREN UND EINRICHTUNG ZUR BESCHICHTUNG EINES ERZEUGNISSES**
METHOD AND DEVICE FOR COATING A PRODUCT
PROCEDE ET DISPOSITIF POUR APPLIQUER UN REVETEMENT SUR UN PRODUIT

(30) Priorität: 04.03.1999 EP 99104404
(43) Veröffentlichungstag der Anmeldung: 02.01.2002
(73) Patentinhaber: SIEMENS AKTIENGESELLSCHAFT, 80333 München (DE)
(72) Erfinder: REYMANN, Helge, D-10589 Berlin (DE)
(86) Internationale Anmeldenummer: EP0001301
(87) Internationale Veröffentlichungsnummer: WO00052220

(56) Entgegenhaltungen:
- EP-A- 0 477 990
- DE-A- 4 321 135
- US-A- 3 615 881
- US-A- 3 649 225
- PATENT ABSTRACTS OF JAPAN vol. 096, no. 002, 29. Februar 1996 (1996-02-29) & JP 07 268605 A (NISSHIN STEEL CO LTD), 17. Oktober 1995 (1995-10-17)

## Beschreibung

Die Erfindung betrifft ein Verfahren zur Beschichtung eines Erzeugnisses mit einer metallischen Schicht, insbesondere mit einer metallischen Oxidationsschutzschicht, in einer Vakuumanlage. Bei dem Verfahren wird das Erzeugnis in die Vakuumanlage eingeführt und von Zimmertemperatur auf eine Erzeugnistemperatur geheizt, die metallische Schicht auf das Erzeugnis aufgebracht und das beschichtete Erzeugnis einer Wärmenachbehandlung unterzogen. Die Erfindung betrifft weiterhin eine Einrichtung zur Beschichtung eines Erzeugnisses mit einer metallischen Schicht in einer Vakuumanlage, wobei die Vakuumanlage eine Beschichtungskammer und eine Wärmenachbehandlungskammer umfaßt.

Es sind Beschichtungsanlagen zur Beschichtung von Gasturbinenschaufeln bekannt, z.B. eine Inline EB-PVD Beschichtungsanlage von Interturbine Von Ardenne GmbH (EB-PVD: Electron Beam - Physical Vapour Deposition), bei denen mittels physikalischer Verdampfungsverfahren eine keramische Schicht auf die Gasturbinenschaufel aufgebracht wird. Eine solche Beschichtungsanlage kann beispielsweise aus unmittelbar hintereinander geschalteten und mit einem Transfersystem zur Beförderung der Turbinenschaufeln verbundenen Kammern aufgebaut sein. Die erste Kammer dient dabei als Beladungskammer für Turbinenschaufeln. Von der Beladungskammer aus werden die Turbinenschaufeln in eine zweite, an die Beladungskammer angeschlossene Vakuumkammer transportiert und dort vorgeheizt. Anschließend erfolgt ein Weitertransport in eine Prozeßkammer, in der ein keramisches Material, insbesondere mit Yttrium stabilisiertes Zirkonoxid, mittels Elektronenstrahlverdampfen erhitzt, geschmolzen und verdampft wird. Das keramische Material kondensiert auf den Turbinenschaufeln und bildet somit die keramische Beschichtung. Die so beschichteten Turbinenschaufeln werden in eine Kühlkammer weitertransportiert und hierin gekühlt. Die Kühlung erfolgt unkontrolliert, insbesondere ungesteuert, da die Turbinenschaufeln in der Kühlkammer sich selbst überlassen werden und folglich ihre Wärme über Wärmestrahlung an die Umgebung abgeben, bis sie auf Zimmertemperatur abgekühlt sind.

Aus der US-Patentschrift 5,238,752 geht ein Wärmedämmschichtsystem hervor, welches auf einer Turbinenschaufel aufgebracht ist. Die Turbinenschaufel besteht hierbei in ihrem Grundwerkstoff aus einer Nickelbasis-Superlegierung, auf die eine metallische Schutz- oder Anbindungsschicht der Art MCrAlY oder PtAl aufgebracht ist. Hierbei steht M für Nickel und/oder Kobalt, Cr für Chrom, Al für Aluminium, Y für Yttrium und Pt für Platin. Auf dieser metallischen Anbindungsschicht bildet sich eine dünne Schicht aus Aluminiumoxid, auf der die eigentliche keramische Wärmedämmschicht aus mit Yttrium stabilisiertem Zirkonoxid aufgebracht ist. Die Beschichtung der Turbinenschaufel erfolgt hierbei mittels eines physikalischen Verdampfungsverfahrens, bei dem das keramische Material (Zirkonoxid) durch Beschuß mit Elektronenstrahlen verdampft wird. Dieser Beschichtungsprozeß erfolgt in einer Vakuumkammer, wobei die Turbinenschaufel über einen Substratheizer mittels Wärmestrahlung auf eine Temperatur von etwa 1200 K bis 1400 K, vorzugsweise etwa 1300 K, aufgeheizt wird.

Die in den oben beschriebenen, bekannten Verfahren und Einrichtungen hergestellten Schichten auf Turbinenschaufeln sind hinsichtlich ihrer Standzeiten, insbesondere bei Heißgasbeaufschlagung bei einem Einsatz in einer Gasturbine, noch verbesserungswürdig.

Der Erfindung liegt die Aufgabe zugrunde, ein Verfahren zur Beschichtung eines Erzeugnisses mit einer metallischen Schicht anzugeben. Dabei soll die Dauerhaltbarkeit der metallischen Schicht, vor allem gegenüber korrosiven und oxidierenden Angriffen, deutlich verbessert werden. Eine weitere Aufgabe der Erfindung ist es, eine Einrichtung zur Beschichtung eines Erzeugnisses mit einer metallischen Schicht anzugeben. Mit der Einrichtung soll die Herstellung einer qualitativ hochwertigen metallischen Schicht auf dem Erzeugnis möglich sein.

Erfindungsgemäß wird die erstgenannte Aufgabe gelöst durch ein Verfahren gemäß Anspruch 1 zur Beschichtung eines Erzeugnisses mit einer metallischen Schicht, insbesondere mit einer metallischen Oxidationsschutzschicht, in einer Vakuumanlage, bei dem das Erzeugnis in die Vakuumanlage eingeführt und von Zimmertemperatur auf eine Erzeugnistemperatur geheizt, die metallische Schicht auf das Erzeugnis aufgebracht, das beschichtete Erzeugnis einer Wärmenachbehandlung unterzogen wird, wobei die Wärmenachbehandlung sich an das Aufbringen der Schicht so anschließt, daß die Temperatur des Erzeugnisses nach dem Aufbringen der Schicht und vor der Wärmenachbehandlung mindestens so groß wie eine Mindesttemperatur ist, wobei die Mindesttemperatur größer als Zimmertemperatur ist.

Die Erfindung geht hierbei von der Überlegung aus, daß der Qualität einer primär auf den Grundwerkstoff eines Erzeugnisses aufgebrachten metallischen Schicht eine besondere Bedeutung zukommt. Materialeigenschaften sowie charakteristische Schichteigenschaften, wie beispielsweise die Homogenität der Schicht, deren Anbindung an das Substrat und die Struktur der Grenzschicht zwischen Schicht und Substrat sind wichtige Qualitätsmerkmale. Diese haben auch Einfluß auf die Anbindung und Beschaffenheit weiterer Schichten, die in möglicherweise weiteren Beschichtungsprozessen auf die primäre Schicht aufgebracht werden.

Eine metallische Schicht auf einem Erzeugnis, beispielsweise eine metallische Oxidationsschutzschicht, wird daher ihre Funktion, etwa als Schutzschicht vor Korrosion- und/oder Oxidation, um so wirkungsvoller entfalten, je besser die oben genannten Schichteigenschaften realisiert sind. Für die Standzeiten metallischer Schichten auf Erzeugnissen, die sich beispielsweise unter oxidierenden oder korrosiven Bedingungen einstellen, ist neben der Wahl der Materialien insbesondere die Anbindung der Schicht an den Grundwerkstoff des Erzeugnisses bestimmend. Diese ist von der Behandlung des Erzeugnisses in allen Phasen des Herstellungsprozesses abhängig. Hierbei sind chemische und physikalische - insbesondere thermische Einflüsse zu beachten, die möglicherweise die Ausbildung und Anbindung der Schicht beeinträchtigen können. Chemische Einflüsse können durch die Wahl geeigneter Werkstoffe für sämtliche Einbauteile der Apparatur, die gegenüber den Schichtmaterialien möglichst chemisch inert sein sollen, weitgehend reduziert werden. Physikalische Konditionen unter denen der Herstellungsprozeß einer Schicht vonstatten geht betreffen die Prozeßführung in ihrer Gesamtheit, also von der Erzeugnispräparation, über das Aufbringen der Schutzschicht bis zur weiteren Behandlung des Erzeugnisses - üblicherweise eine nachfolgende Wärmenachbehandlung - sowie sämtliche mögliche Zwischenschritte. Die Kontrolle und Ausgestaltung der Prozeßführung in allen Phasen des Herstellungsprozesses ist daher sehr wesentlich. Dabei sind zeitabhängige und ortsabhängige thermodynamische Prozeßparameter, wie Druck und Temperatur, denen das Erzeugnis im Herstellungsprozeß unterworfen ist, zu berücksichtigen. Beispielsweise hat aufgrund der im allgemeinen unterschiedlichen Wärmeausdehnungskoeffizienten von Grundwerkstoff und Schichtmaterial die Erzeugnistemperatur beim Aufbringen der Schicht (Beschichtungstemperatur) und der Temperaturverlauf bis zum Abschluß einer Wärmenachbehandlung des beschichteten Erzeugnisses großen Einfluß auf die Ausbildung der Grenzschicht zwischen Erzeugnisoberfläche und Schicht.

Mit dem Verfahren ist eine quasi stationäre Prozeßführung hinsichtlich der Temperatur in allen Phasen des Herstellungsprozesses der metallischen Schicht erreichbar. Hierbei wird nach dem Aufbringen der metallischen Schicht auf das Erzeugnis und vor der Wärmenachbehandlung zu jeder Zeit eine Mindesttemperatur des Erzeugnisses sichergestellt, die größer als Zimmertemperatur ist.

Bei Erzeugnissen, die Hochtemperaturbauteile von Gasturbinen darstellen, etwa bei Gasturbinenschaufeln oder Hitzeschildelementen von Brennkammern, beträgt diese Mindesttemperatur vorzugsweise etwa 500 K, insbesondere etwa 900 K bis 1400 K.

Das Verfahren zeichnet sich dadurch aus, daß das Erzeugnis sich mit seiner Umgebung stets nahe an einem thermodynamischen Gleichgewichtszustand befindet. Zeitliche wie räumliche Temperaturgradienten, insbesondere Temperaturschocks, werden vermieden. Durch diesen neuen Weg in der Prozeßführung bezüglich des Temperaturverlaufs ist es möglich, die Anbindung der metallischen Schicht an den Grundwerkstoff des Erzeugnisses in der Wärmenachbehandlung deutlich zu verbessern. In der auf diese Weise sich an das Aufbringen der metallischen Schicht anschließenden Wärmenachbehandlung wird durch Diffusionsvorgänge eine feste Verbindung zwischen Grundwerkstoff und Schichtmaterial hergestellt, und eine qualitativ hochwertige Schicht auf dem Erzeugnis ausgebildet.

Vorzugsweise erfolgt das Aufbringen der metallischen Schicht auf das Erzeugnis in einem Beschichtungsbereich und die Wärmenachbehandlung in einem Wärmenachbehandlungsbereich. Hierbei sind der Beschichtungsbereich und der Wärmenachbehandlungsbereich verschiedene Bereiche der Vakuumanlage. Es ist vorteilhaft, das Aufbringen der metallischen Schicht auf das Erzeugnis und die Wärmenachbehandlung in derselben Vakuumanlage durchzuführen, aber räumlich voneinander zu trennen, da diese Prozeßschritte bei etwas unterschiedlichen Temperaturen durchgeführt werden und im allgemeinen verschiedene Prozeßdauern aufweisen. Beispielsweise wird das Aufbringen einer metallischen Schicht auf eine Gasturbinenschaufel, insbesondere eine metallischen Oxidations- und Korrosionsschutzschicht, bei einer Beschichtungstemperatur von etwa 1100 K bis 1200 K durchgeführt, während die Wärmenachbehandlung der Gasturbinenschaufel bei einer Wärmenachbehandlungstemperatur von etwa 1200 K bis 1500 K erfolgt. Die Trennung von Beschichtungsbereich und Wärmenachbehandlungsbereich wirkt sich günstig auf die Qualität und Reproduzierbarkeit der metallischen Schichten aus. Es wird vermieden, daß unterschiedliche Prozeßschritte mit unterschiedlichen Prozeßparametern im selben Bereich einer Anlage durchgeführt werden. Dies könnte praktisch nur unter einem periodischen Wechsel der Betriebsparameter der Vakuumanlage erfolgen, was die Qualität und Reproduzierbarkeit der Schichten beeinträchtigt.

Bevorzugt wird das beschichtete Erzeugnis automatisch vom Beschichtungsbereich in den Wärmenachbehandlungsbereich überführt. Diese Verfahrensweise ist im Hinblick auf eine industrielle Herstellung der metallischen Schicht sehr vorteilhaft. Vor allem in einer Vakuumanlage ist eine automatische, vorzugsweise elektronisch gesteuerte Überführung der Erzeugnisse, anderen bekannten Ausführungen, beispielsweise mit aufwendigen, manuell extern-bedienbaren Manipulatoren und mit gedichteten Vakuumdurchführungen, weit überlegen.

Vorzugsweise wird das wärmenachbehandelte Erzeugnis kontrolliert auf Zimmertemperatur abgekühlt. Weiter bevorzugt wird die Abkühlung auf Zimmertemperatur gesteuert oder geregelt durchgeführt. Dies erfolgt im Vorfeld einer möglichen Entnahme des Erzeugnisses aus der Vakuumanlage. Durch Kontrolle und Steuerung des Abkühlvorgangs wird vermieden, daß nach Abschluß der Wärmenachbehandlung das Erzeugnis in unkontrollierter Weise auf Zimmertemperatur abgekühlt wird, was sich wegen der dann auftretenden Wärmespannungen zwischen der metallischen Schicht und dem Substrat nachteilig auf die Schichteigenschaften auswirken könnte.

Vorzugsweise befindet sich eine erste Anzahl von Erzeugnissen im Beschichtungsbereich und simultan eine zweite Anzahl von Erzeugnissen im Wärmenachbehandlungsbereich, wobei die zweite Anzahl größer ist als die erste Anzahl. Diese Verfahrensweise ist sehr vorteilhaft im Hinblick auf eine industrielle Serienherstellung von metallischen Schichten auf Erzeugnissen. Auf Erzeugnisse wird die metallische Schicht im Beschichtungsbereich aufgebracht, während zur gleichen Zeit im Wärmenachbehandlungsbereich Erzeugnisse einer Wärmenachbehandlung unterzogen werden. Dadurch ist eine rationelle Herstellung von metallischen Schichten auf Erzeugnissen gegeben. Ein kontinuierlicher und simultaner Durchlauf von Erzeugnissen durch die Verfahrensschritte ist möglich. Insbesondere ist bei diesem Durchlaufverfahren der Durchlauf von Erzeugnissen pro Zeiteinheit gegenüber nichtsimultanen Verfahrensschritten deutlich erhöht. Bedingt durch die unterschiedlichen Prozeßdauern der einzelnen Verfahrensschritte, werden bei dem Verfahren mehr Erzeugnisse einer Wärmenachbehandlung unterzogen, als zur gleichen Zeit sich im Beschichtungsbereich befinden, da der Wärmenachbehandlungsprozeß im allgemeinen der zeitlich limitierende Prozeß darstellt. Zum Beispiel hat das Aufbringen einer metallischen Schicht auf eine Gasturbinenschaufel, insbesondere das Aufbringen einer metallischen Oxidations- und Korrosionsschutzschicht, eine Prozeßdauer von etwa 30 min, während die Wärmenachbehandlung der Gasturbinenschaufel mit etwa 60 min bis 240 min beträchtlich länger dauert. Durch Auslegung der Vakuumanlage unter Berücksichtigung der jeweiligen Prozeßdauern wird ein kontinuierlicher und simultaner Durchlauf von Erzeugnissen sichergestellt, und eine rationelle Fertigung ermöglicht.

Bevorzugt wird als Erzeugnis ein Hochtemperaturbauteil einer Gasturbine, insbesondere eine Gasturbinenschaufel oder ein Hitzeschildelement einer Brennkammer, verwendet. Weiter bevorzugt wird als Grundwerkstoff für das Hochtemperaturbauteil eine Nickel-, oder Eisen- oder Kobaltbasis-Superlegierung verwendet. Eine Gasturbinenschaufel ist ein Hochtemperaturbauteil, welches im Heißgaskanal einer Gasturbine angeordnet ist. Man unterscheidet Turbinenleitschaufeln und Turbinenlaufschaufeln, die großen thermischen Belastungen, insbesondere bei Gasturbinen mit hohen Turbineneintrittstemperaturen von z.B. über 1500 K, sowie korrosiven und oxidierenden Bedingungen durch das Heißgas, ausgesetzt sind. Daher muß für den Grundwerkstoff eine entsprechende Legierung gewählt werden. Ein Beispiel für eine hochtemperaturfeste Legierung dieser Art mit hoher Zeitstandfestigkeit auf Nickelbasis ist Inconel 713 C, die in ihren wesentlichen Komponenten aus 73% Nickel, 13 % Chrom, 4.2 % Molybdän sowie 2% Niob hergestellt ist.

Als metallische Schicht wird vorzugsweise eine MCrAlX Legierung verwendet, wobei M für eines oder mehrere Elemente der Gruppe umfassend Eisen, Kobalt und Nickel, Cr für Chrom, Al für Aluminium sowie X für eines oder mehrere Elemente der Gruppe umfassend Yttrium, Rhenium sowie die Elemente der Seltenen Erden stehen. Diese metallische Schicht wird im Beschichtungsbereich in bekannter Weise durch thermisches Spritzen mit den Verfahren VPS (Vacuum Plasma Spraying) oder LPPS (Low Pressure Plasma Spraying) auf das Erzeugnis, insbesondere das Hochtemperaturbauteil einer Gasturbine, aufgebracht. Die MCrAlX-Schichten sind besonders für Hochtemperaturbauteile in Gasturbinen mit einem Grundwerkstoff aus einer Nickel-, oder Eisen- oder Kobaltbasis-Superlegierung geeignet. Sie eignen sich in stationären Gasturbinen und Flugtriebwerken mit hoher Turbineneintrittstemperatur. Sie eignen sich darüberhinaus als Haftvermittlerschicht für das Aufbringen weiterer Schichten in anderen Beschichtungsverfahren, wie beispielsweise zur Herstellung einer keramischen Wärmedämmschicht auf einem Erzeugnis mittels PVD (Physical Vapour Deposition).

Die auf eine Einrichtung gerichtete Aufgabe wird erfindungsgemäß gelöst durch eine Einrichtung gemäß Anspruch 9 zur Beschichtung eines Erzeugnisses mit einer metallischen Schicht in einer Vakuumanlage, umfassend eine Beschichtungskammer und eine Wärmenachbehandlungskammer, wobei die Wärmenachbehandlungskammer mit der Beschichtungskammer vakuumdicht verbunden ist.

Dadurch wird es ermöglicht, das Aufbringen der metallischen Schicht auf ein Erzeugnis und die anschließende Wärmenachbehandlung in einer Anlage durchzuführen. Die vakuumdichte Verbindung zwischen der Beschichtungskammer und der Wärmenachbehandlungskammer gewährleistet, daß das Erzeugnis zu keinem Zeitpunkt während des Verfahrens der Atmosphäre, insbesondere dem Sauerstoff der Luft, ausgesetzt ist. Gegenüber herkömmlichen Anlagen, bei denen für das Aufbringen der Schicht und für die Wärmenachbehandlung separate und untereinander nicht vakuumdicht verbundene Vakuumkammern vorgesehen sind, ist die Vakuumanlage daher überlegen.

Vorzugsweise ist in der Wärmenachbehandlungskammer eine Beheizungseinrichtung vorgesehen. Die Beheizungseinrichtung ist dabei in bekannten Ausgestaltungen realisiert, beispielsweise durch ein Strahlungs-Heizelement zur indirekten Strahlungsheizung oder durch eine Elektronenstrahlkanone zum Aufheizen des Erzeugnisses durch direkten Elektronenbeschuß. Zur Wärmenachbehandlung ist die Prozeßführung hinsichtlich der Temperatur des Erzeugnisses so zu gestalten, daß sich die Erzeugnistemperatur auf einen vorgesehenen Wert, die Wärmenachbehandlungstemperatur, einstellt. Durch Temperaturmessung des Erzeugnisses und Regelung der Heizleistung der Beheizungseinrichtung, beispielsweise Regelung der Strahlungsleistung eines Strahlungs-Heizelements über den Heizstrom, wird dabei die Wärmenachbehandlungstemperatur eingestellt.

Vorzugsweise ist eine Vorheizkammer vorgesehen, die der Beschichtungskammer vorgeordnet ist und mit dieser vakuumdicht verbunden ist. Die Vorheizkammer ist als Vakuumkammer ausgeführt und ist ein Bestandteil der gesamten Vakuumanlage zur Beschichtung eines Erzeugnisses mit einer metallischen Schicht. In der Vorheizkammer ist eine Beheizungseinrichtung vorgesehen, die in bekannter Weise, beispielsweise durch ein Strahlungs-Heizelement zur indirekten Strahlungsheizung oder durch eine Elektronenstrahlkanone zum Aufheizen des Erzeugnisses durch direkten Elektronenbeschuß, ausgeführt ist. Die Vorheizkammer dient einerseits der Aufnahme und dem Vorheizen des Erzeugnisses von Zimmertemperatur auf eine Erzeugnistemperatur und andererseits der Vorbehandlung und Präparation des Erzeugnisses für nachfolgende Verfahrensschritte, insbesondere für das Aufbringen der metallischen Schicht auf das Erzeugnis in der Beschichtungskammer. In der Vorheizkammer können auch mögliche Verunreinigungen, die unter Umständen in die Oberfläche des Erzeugnisses eingetragen sind, aus dem Erzeugnis ausgasen. Verunreinigungen können das Aufbringen der Schicht auf das Erzeugnis und somit die Qualität der Schicht nachteilig beeinflussen. Daher erfüllt die Vorheizkammer neben der Vorprozeßerwärmung gleichzeitig eine wichtige Reinigungsfunktion für das zu beschichtende Erzeugnis, so daß durch den Entgasungsprozeß ein Erzeugnis mit entsprechend sauber präparierter Oberfläche und wohldefinierter Erzeugnistemperatur hergestellt ist.

Vorzugsweise ist eine Abkühlkammer vorgesehen, die der Wärmenachbehandlungskammer nachgeordnet und mit dieser vakuumdicht verbunden ist. Im Anschluß an die Wärmenachbehandlung eines Erzeugnisses ist dieses erwärmt. Um das Erzeugnis weiter zu behandeln oder seiner Bestimmung zuzuführen, wird man es in geeigneter Weise auf Zimmertemperatur bringen. Dazu muß es abgekühlt werden, wofür in herkömmlichen Verfahren ebenfalls die externe, nicht an eine Beschichtungskammer angekoppelte Wärmenachbehandlungskammer verwendet wird. In dieser wird das Erzeugnis in kontrollierter Weise abgekühlt. Dagegen erfolgt in der Vakuumanlage der kontrollierte Abkühlvorgang in einer separaten Abkühlkammer. Die Abkühlkammer ist dabei als Vakuumkammer ausgeführt und ein Bestandteil der gesamten Vakuumanlage. Zum kontrollierten Abkühlen des Erzeugnisses ist in der Abkühlkammer eine Beheizungseinrichtung vorgesehen. Sie sorgt dafür, daß das Erzeugnis während des Abkühlvorgangs eine vorgegebene Temperatur hat. Dadurch erfolgt die Abkühlung des Erzeugnisses nicht zu rasch über Wärmeabstrahlung oder Wärmeleitung an die Umgebung, sondern quasi stationär, indem die Temperatur allmählich und kontrolliert durch Regelung der Heizleistung der Beheizungseinrichtung bis auf Zimmertemperatur reduziert wird. Die Beheizungseinrichtung ist beispielsweise in Form eines bekannten Strahlungs-Heizelements zur indirekten Strahlungsheizung des Erzeugnisses ausgeführt. Zusätzliche bekannte Behandlungseinrichtungen zum Abkühlen des Erzeugnisses, etwa in Form eines Gaszufuhrsystems für inerte Kühlgase (z.B. Argon), sind in der Abkühlkammer vorsehbar. Bei dieser Ausführungsform werden die erwärmten Erzeugnisse in wohldosierter Weise mit einem inerten Kühlgas beaufschlagt und kontrolliert auf Zimmertemperatur abgekühlt. Die Abkühlkammer dient vorteilhafterweise gleichzeitig als Entnahmekammer für die Erzeugnisse.

Bevorzugt ist die vakuumdichte Verbindung zwischen der Beschichtungskammer und der Wärmenachbehandlungskammer über eine Schleusenkammer hergestellt. Sowohl die Prozeßdauern für das Aufbringen der metallischen Schicht auf das Erzeugnis und für dessen Wärmenachbehandlung, als auch die jeweiligen Prozeßparameter, insbesondere die Beschichtungstemperatur und die Wärmenachbehandlungstemperatur, sind unterschiedlich. Zum Beispiel erfolgt das Aufbringen einer metallischen Schicht auf eine Gasturbinenschaufel, insbesondere eine metallische Oxidations- und Korrosionsschutzschicht, bei einer Beschichtungstemperatur von etwa 1100 K bis 1200 K. Hingegen erfolgt die Wärmenachbehandlung der beschichteten Gasturbinenschaufel bei einer deutlich höheren Wärmenachbehandlungstemperatur von 1200 K bis 1500 K. Es ist deshalb zweckmäßig, diese Prozesse durch entsprechende Einrichtungen, hier durch eine separate Schleusenkammer realisiert, auch räumlich soweit voneinander zu trennen, daß gegenseitige Interaktionen weitgehend ausgeschlossen sind. Auch verfahrenstechnisch ist diese Ausgestaltung günstig. Die Schleusenkammer dient dabei in erster Linie der Überführung der Erzeugnisse von der Beschichtungskammer zur Wärmenachbehandlungskammer. Sie ist integraler Bestandteil der Vakuumanlage. Bevorzugt ist in der Schleusenkammmer eine Beheizungseinrichtung vorgesehen, die eine vorgegebene Erzeugnistemperatur während der Überführung sicherstellt.

Vorteilhafterweise kann dabei die Erzeugnistemperatur in der Schleusenkammer während der Überführung der Erzeugnisse von der Beschichtungskammer in die Wärmenachbehandlungskammer den jeweiligen Prozeßtemperaturen kontinuierlich angepaßt werden. Beim Einsatz der Vakuumanlage zur industriellen Serienfertigung in einem simultanen Durchlaufverfahren dient die Schleusenkammer des weiteren als wichtiges Puffersystem, um gegebenenfalls die Stückzahlen einander anzupassen und somit einen möglichst kontinuierlichen Durchlauf von Erzeugnissen zu gewährleisten.

Vorzugsweise ist ein Transfersystem zur automatischen Überführung des Erzeugnisses von einer Vakuumkammer (Vorheizkammer, Beschichtungskammer, Schleusenkammer, Wärmenachbehandlungskammer, Abkühlkammer) in eine andere Vakuumkammer der Vakuumanlage vorgesehen.

Vor allem in einer Vakuumanlage ist eine automatische, vorzugsweise elektronisch gesteuerte Überführung der Erzeugnisse, anderen bekannten Ausführungen, zum Beispiel mit aufwendigen, manuell extern-bedienbaren Manipulatoren und mit gedichteten Vakuumdurchführungen, überlegen. Um insbesondere einen kontinuierlichen und automatisierten Durchlauf der Erzeugnisse zu ermöglichen, sind die Vakuumkammern der Vakuumanlage (Vorheizkammer, Beschichtungskammer, Schleusenkammmer, Wärmenachbehandlungskammer, Abkühlkammer) mit einem geeigneten Transfersystem ausgestattet. Das Transfersystem weist dabei Einrichtungen zur Übernahme von Erzeugnissen, zum Transport von Erzeugnissen sowie zur Übergabe von Erzeugnissen auf, die in den einzelnen Vakuumkammern angeordnet sind.

Vorzugsweise weist die Beschichtungskammer eine erste Aufnahmekapazität und die Wärmenachbehandlungskammer eine zweite Aufnahmekapazität für Erzeugnisse auf, wobei die zweite Aufnahmekapazität größer als die erste Aufnahmekapazität ist. Allgemein ergibt sich die (mittlere) Anzahl von Erzeugnissen in einer Vakuumkammer aus der Anzahl der zugeführten Erzeugnisse pro Zeiteinheit multipliziert mit der (mittleren) Verweilzeit der Erzeugnisse in der Vakuumkammer. Im idealen kontinuierlichen Durchlauf ist die Anzahl der zugeführten Erzeugnisse pro Zeiteinheit für alle Vakuumkammern gleich. Die (mittlere) Anzahl der Erzeugnisse in einer Vakuumkammer wird dann von der Verweilzeit in dieser Vakuumkammer bestimmt. Die einzuplanenden relativen Aufnahmekapazitäten für Erzeugnisse für die Beschichtungskammer und für Wärmenachbehandlungskammer sind dann näherungsweise durch die jeweiligen Prozeßdauern in diesen Vakuumkammern gegeben. Für das Aufbringen einer MCrAlX-Schicht nach dem VPS oder LPPS-Verfahren auf eine Gasturbinenschaufel mit einem Grundwerkstoff aus einer Nickel-, Eisen- oder Kobaltbasis-Superlegierung erhält man typischerweise eine Prozeßdauer von etwa 30 Minuten, während die Wärmenachbehandlung der Gasturbinenschaufel eine Prozeßdauer von etwa 120 Minuten hat. Demzufolge ist die Wärmenachbehandlungskammer so zu dimensionieren und auszugestalten, daß deren Aufnahmekapazität für Gasturbinenschaufeln mindestens etwa viermal so groß ist wie die Aufnahmekapazität der Beschichtungskammer. Die Vakuumanlage ist so konzipiert, daß sie vorteilhafterweise eine Anpassung der Aufnahmekapazitäten an die jeweiligen Prozeßdauern und somit einen kontinuierlichen und simultanen Durchlauf von Erzeugnissen ermöglicht, was wiederum sehr günstig für eine industrielle Serienfertigung ist.

Die Einrichtung sowie das Verfahren zur Beschichtung eines Erzeugnisses mit einer metallischen Schicht in einer Vakuumanlage werden beispielhaft anhand der in der Zeichnung dargestellten Ausführungsbeispiele näher erläutert. Es zeigen hierbei teilweise schematisch und vereinfacht:
- FIG 1: eine schematische Darstellung in einem Längsschnitt einer Vakuumanlage zur Beschichtung von Erzeugnissen, beispielsweise von Gasturbinenschaufeln, mit einer metallischen Schicht,
- FIG 2: ein Diagramm mit einem vereinfachten Temperaturverlauf für ein Erzeugnis gemäß einem herkömmlichen Verfahren und
- FIG 3: ein Diagramm mit einem vereinfachten Temperaturverlauf für ein Erzeugnis gemäß dem erfindungsgemäßen Verfahren.

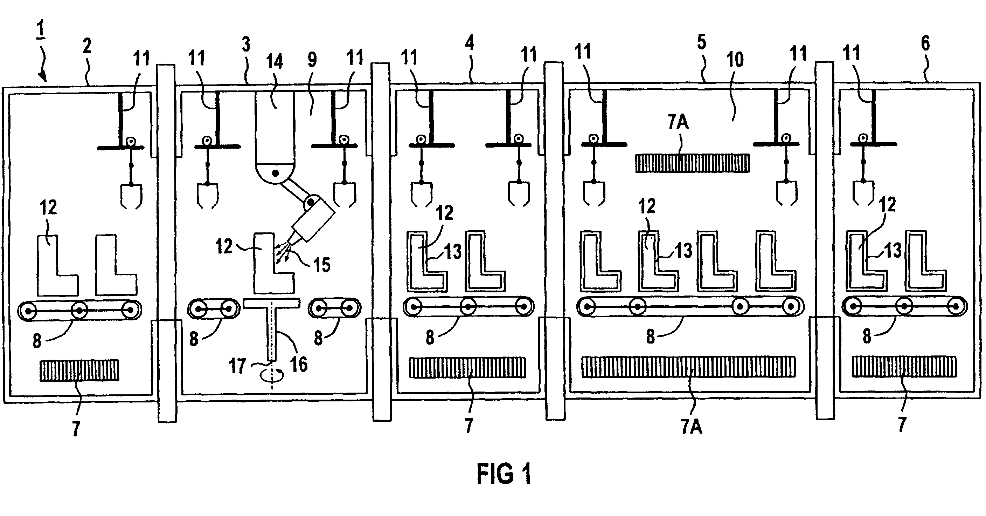

In Figur 1 ist in einer schematischen Darstellung in einem Längsschnitt eine Vakuumanlage 1 zur Beschichtung von Erzeugnissen 12, hier beispielsweise von Gasturbinenschaufeln 12, mit einer metallischen Schicht 13 dargestellt. Die Vakuumanlage 1 weist verschiedene Vakuumkammern 2, 3, 4, 5, 6, aufeinander folgend eine Vorheizkammer 2, eine Beschichtungskammer 3, eine Schleusenkammer 4, eine Wärmenachbehandlungskammer 5 und eine Abkühlkammer 6, auf. Dabei ist die Beschichtungskammer 3 über die Schleusenkammer 4 vakuumdicht mit der Wärmenachbehandlungskammer 5 verbunden. Die Vorheizkammer 2 ist der Beschichtungskammer 3 vorgeordnet und mit dieser vakuumdicht verbunden. Die Abkühlkammer 6 ist der Wärmenachbehandlungskammer 5 nachgeordnet und mit dieser vakuumdicht verbunden. In der Vorheizkammer 2, der Schleusenkammer 4, der Wärmenachbehandlungskammer 5 und der Abkühlkammer 6 ist jeweils mindestens eine Beheizungseinrichtung 7, 7A, vorgesehen. Im gezeigten Ausführungsbeispiel sind die Beheizungseinrichtungen 7, 7A in den einzelnen Vakuumkammern 2, 4, 5, 6 als Strahlungs-Heizelemente zur kontrollierten Erwärmung der in den Vakuumkammern angeordneten Gasturbinenschaufeln 12 auf eine vorgegebene Erzeugnistemperatur ausgeführt. In den Vakuumkammern 2, 3, 4, 5, 6 ist ein Transfersystem 8, 11 vorgesehen, welches jeweils als Übergabe-/Übernahmeeinrichtung 11 und Transporteinrichtung 8 in den einzelnen Vakuumkammern 2, 3, 4, 5, 6 ausgeführt ist. In der Vorheizkammer 2, der Schleusenkammer 4, der Wärmenachbehandlungskammer 5 sowie der Abkühlkammer 6 sind jeweils mindestens zwei Gasturbinenschaufeln 12 auf den jeweiligen Transporteinrichtungen 8 angeordnet. Die Beschichtungskammer 3 weist einen Beschichtungsbereich 9 auf, in dem eine Beschichtungseinrichtung 14 sowie eine um eine Längsachse 17 rotierbare Halterung 16 für Gasturbinenschaufeln 12 angeordnet sind. Die Beschichtungseinrichtung 14 ist hierbei als VPS (Vacuum Plasma Spraying)-oder LPPS (Low Pressure Plasma Spraying)-Einrichtung (Plasmabrenner) zum thermischen Spritzen von Beschichtungsmaterial 15 - beispielsweise MCrAlX - auf eine Gasturbinenschaufel 12, ausgeführt. Die Beschichtungseinrichtung 14 dient zugleich der Erwärmung der Gasturbinenschaufel 12 auf eine vorgegebene Erzeugnistemperatur. Diese ist bei einem Beschichtungsvorgang durch die heißen Prozeßgase der Beschichtungseinrichtung 14 (Plasmabrenner) und durch das auf die Gasturbinenschaufel 12 auftreffende Beschichtungsmaterial 15 gewährleistet. Eine Gasturbinenschaufel 12 befindet sich im Beschichtungsbereich 9 auf der Halterung 17. Die Beschichtungseinrichtung 14 ist oberhalb der Gasturbinenschaufel 12 im Beschichtungsbereich 9 angeordnet. In der Wärmenachbehandlungskammer 5 ist ein Wärmenachbehandlungsbereich 10 gebildet, in dem sich eine Anzahl von beschichteten Gasturbinenschaufeln 12 mit einer metallischen Schicht 13, insbesondere einer MCrAlX-Schicht, auf der Transporteinrichtung 8 befinden. Dabei ist die Anzahl der Gasturbinenschaufeln 12 im Wärmenachbehandlungsbereich 10 größer als die Anzahl der Gasturbinenschaufeln 12 im Beschichtungsbereich 9. Im Wärmenachbehandlungsbereich 10 sind zwei Beheizungseinrichtungen 7A vorgesehen. Eine Beheizungseinrichtung 7A ist oberhalb und die andere Beheizungseinrichtung 7A unterhalb der Gasturbinenschaufeln 12 angeordnet, so daß hierdurch über Wärmestrahlung eine Aufheizung der Gasturbinenschaufeln 12 auf eine vorgegebene Erzeugnistemperatur, welche die Wärmenachbehandlungstemperatur ist, sichergestellt ist. Die Vakuumkammern 2, 3, 4, 5, 6 der Vakuumanlage 1 sind mit einem in Figur 1 nicht gezeigten Vakuumpumpensystem verbunden, welches vorzugsweise aus einer Diffusionspumpe, Ventilen und Vakuum-Meßeinrichtungen sowie einer Vorvakuumpumpe besteht, so daß in den einzelnen Vakuumkammern 2, 3, 4, 5, 6 ein jeweils erforderliches Vakuum einstellbar ist.

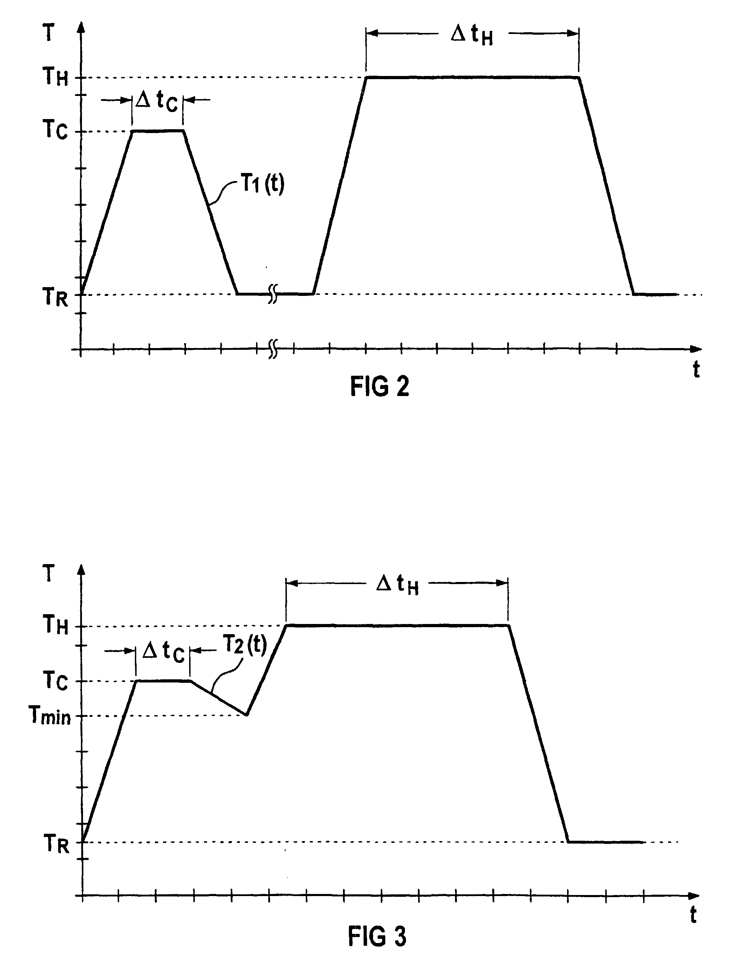

Bei dem Beschichtungsverfahren zur Beschichtung eines Erzeugnisses 12, welches beispielsweise eine Gasturbinenschaufel 12 ist, mit einer metallischen Schicht 13, insbesondere mit einer metallischen MCrAlX-Oxidationsschutzschicht, in einer Vakuumanlage 1, wird eine Gasturbinenschaufel 12 zuerst in die Vorheizkammer 2 eingeführt und auf der Transporteinrichtung 8 des Transfersystems 8, 11 angeordnet. Die Vorheizkammer 2 dient der Aufnahme und dem Vorheizen der Gasturbinenschaufel 12. Mit der in der Vorheizkammer 2 vorgesehenen Beheizungseinrichtung 7, wird die Gasturbinenschaufel 12 von Zimmertemperatur auf eine Erzeugnistemperatur, welche die Beschichtungstemperatur ist, geheizt. In der Vorheizkammer 2 wird die Gasturbinenschaufel 12 vorbehandelt und für nachfolgende Verfahrensschritte, insbesondere für das Aufbringen der metallischen Schicht 13 auf die Gasturbinenschaufel 12 in der Beschichtungskammer 3, präpariert. In der Vorheizkammer 2 können auch mögliche Verunreinigungen, die unter Umständen in die Oberfläche der Gasturbinenschaufel 12 eingetragen sind, aus der Gasturbinenschaufel 12 ausgasen. Daher erfüllt die Vorheizkammer 2 neben der Vorprozeßerwärmung gleichzeitig eine wichtige Reinigungsfunktion für die zu beschichtende Gasturbinenschaufel 12. Es wird hier nach dem Aufheiz- und Entgasungsprozeß eine Gasturbinenschaufel 12 mit entsprechend sauber präparierter Oberfläche und wohldefinierter Erzeugnistemperatur, welche die Beschichtungstemperatur ist, bereitgestellt. Anschließend wird die Gasturbinenschaufel 12 mit dem Transfersystem 8, 11 von der Vorheizkammer 2 in den Beschichtungsbereich 9 der Beschichtungskammer 3 automatisch überführt und auf einer beweglichen, hier auf der um eine Längsache 17 rotierbaren Halterung 16 angeordnet. In der Beschichtungskammer 3 wird bei dem Beschichtungsvorgang eine metallische Schicht 13, beispielsweise eine MCrAlX-Oxidationsschutzschicht, auf die Gasturbinenschaufel 12 aufgebracht. Das Beschichtungsmaterial 15 (MCrAlX) wird beispielsweise durch thermisches Spritzen mit den Verfahren VPS-Vacuum Plasma Spraying oder LPPS-Low Pressure Plasma Spraying auf die Oberfläche der um die Längsachse 17 bewegten, in diesem Fall um die Längsachse 17 rotierenden, Gasturbinenschaufel 12 aufgebracht. Die Prozeßdauer für das Aufbringen dieser Schicht 13 beträgt dabei etwa 30 min. Während dieser Zeitdauer wird die Gasturbinenschaufel 12 durch den prozeßbedingten Wärmeeintrag in die Gasturbinenschaufel 12 auf einer Beschichtungstemperatur gehalten, die bei etwa 1100 K bis 1200 K liegt. Hierbei erfolgt die Erwärmung der Gasturbinenschaufel 12 durch die heißen Prozeßgase der Beschichtungseinrichtung 14 (Plasmabrenner) und durch das auf die Gasturbinenschaufel 12 auftreffende Beschichtungsmaterial 15. Nach dem Aufbringen der metallischen Schicht 13 auf die Gasturbinenschaufel 12 wird diese vom Beschichtungsbereich 9 in den Wärmenachbehandlungsbereich 10 mit dem Transfersystem 8, 11 automatisch überführt. Diese Überführung erfolgt über die Schleusenkammer 4. In der Schleusenkammer 4 wird die Gasturbinenschaufel 12, mittels der dort angeordneten Beheizungseinrichtung 7, auf einer vorgegebenen Erzeugnistemperatur gehalten, die stets größer als eine Mindesttemperatur ist. Die Mindesttemperatur ist dabei größer als Zimmertemperatur und beträgt vorzugsweise 500 K, insbesondere zwischen etwa 900 K bis 1400 K. Nach der Überführung wird im Wärmenachbehandlungsbereich 10 die mit einer metallischen Schicht 13 versehene Gasturbinenschaufel 12 einer Wärmenachbehandlung unterzogen, die bei einer Wärmenachbehandlungstemperatur von etwa 1200 K bis 1500 K stattfindet. Hierzu wird die Gasturbinenschaufel 12 mit den Beheizungseinrichtungen 7A auf die vorgegebene Wärmenachbehandlungstemperatur gebracht und auf dieser für eine Zeitdauer gehalten. Die Prozeßdauer beträgt hier beispielsweise 120 min (siehe auch Beschreibungen zu Figur 2 und Figur 3). Dadurch wird eine feste Anbindung (Diffusionsanbindung) zwischen der metallischen Schicht 13 und dem Grundwerkstoff der Gasturbinenschaufel 12 hergestellt. Nach der Wärmenachbehandlung wird die Gasturbinenschaufel 12 von der Wärmenachbehandlungskammer 5 in die Abkühlkammer 6 automatisch überführt. Nach der Wärmenachbehandlung einer Gasturbinenschaufel 12 ist diese auf eine Temperatur erwärmt. Um die Gasturbinenschaufel 12 weiter zu behandeln oder ihrer Bestimmung zuzuführen wird sie in geeigneter Weise auf Zimmertemperatur gebracht. Dazu muß sie abgekühlt werden. In herkömmlichen Verfahren wird dies ebenfalls in der externen Wärmenachbehandlungskammer durchgeführt, die nicht an eine Beschichtungskammer vakuumtechnisch angekoppelt ist. In der Vakuumanlage erfolgt der kontrollierte Abkühlvorgang dagegen in der separaten Abkühlkammer 6. Zum kontrollierten Abkühlen der Gasturbinenschaufel 12 ist in der Abkühlkammer 6 eine Beheizungseinrichtung 7 vorgesehen. Diese sorgt dafür, daß die Gasturbinenschaufel 12 während des Abkühlvorgangs eine vorgegebene Temperatur hat. Dadurch erfolgt die Abkühlung der Gasturbinenschaufel 12 nicht zu rasch über Wärmeabstrahlung oder Wärmeleitung an die Umgebung, sondern quasi stationär, indem die Temperatur allmählich und kontrolliert, durch Steuerung oder Regelung der Heizleistung der Beheizungseinrichtung 7, bis auf Zimmertemperatur reduziert wird. Nachdem die Gasturbinenschaufel 12 in der Abkühlkammer 6 in kontrollierter Weise auf Zimmertemperatur abgekühlt ist, wird sie der Abkühlkammer 6 entnommen.

Das gerade exemplarisch für ein Erzeugnis 12, insbesondere eine Gasturbinenschaufel 12, beschriebene Verfahren zur Beschichtung eines Erzeugnisses 12 mit einer metallischen Schicht 13 zeichnet sich dadurch aus, daß es als ein kontinuierliches und simultanes Durchlaufverfahren konzipiert ist. Auf diese Weise können mehrere Erzeugnisse 12 verschiedene Verfahrensschritte simultan und kontinuierlich durchlaufen. In Figur 1 ist dies dadurch veranschaulicht, daß sich beispielsweise eine Gasturbinenschaufel 12 im Beschichtungsbereich 9 und simultan eine größere Anzahl von Gasturbinenschaufeln 12 jeweils in der Vorheizkammer 2, in der Schleusenkammer 4, im Wärmenachbehandlungsbereich 10 und in der Abkühlkammer 6 befinden. Auf Gasturbinenschaufeln 12 wird demzufolge eine metallische Schicht 13 im Beschichtungsbereich 9 aufgebracht, während simultan im Wärmenachbehandlungsbereich 10 mit einer metallischen Schicht 13 versehene Gasturbinenschaufeln 12 einer Wärmenachbehandlung unterzogen werden, und während zur gleichen Zeit in der Vorheizkammer 2 Gasturbinenschaufeln 12 vorbehandelt werden, und gleichzeitig in der Abkühlkammer 6 Gasturbinenschaufeln 12 kontrolliert abgekühlt werden, und gleichzeitig in der Schleusenkammer 4 Gasturbinenschaufeln 12 überführt werden. Ein kontinuierlicher und simultaner Durchlauf von Gasturbinenschaufeln 12 durch die verschiedenen Verfahrensschritte ist möglich. Insbesondere ist bei diesem Durchlaufverfahren der Durchlauf von Gasturbinenschaufeln 12 pro Zeiteinheit gegenüber nichtsimultanen und/oder nichtkontinuierlichen Verfahren deutlich erhöht. Bedingt durch die unterschiedlichen Prozeßdauern der einzelnen Verfahrensschritte, werden bei dem Verfahren mehr Gasturbinenschaufeln 12 einer Wärmenachbehandlung unterzogen, als zur gleichen Zeit im Beschichtungsbereich 9 beschichtet werden, da der Wärmenachbehandlungsprozeß im allgemeinen den zeitlich limitierenden Prozeß darstellt. Durch Auslegung der Vakuumanlage 1 unter Berücksichtigung der jeweiligen Prozeßdauern wird ein kontinuierlicher und simultaner Durchlauf von Erzeugnissen 12 sichergestellt, und eine rationelle Herstellung von metallischen Schichten 13 auf Erzeugnissen 12 ermöglicht. Dabei eignet sich das Verfahren neben der Beschichtung von Gasturbinenschaufeln 12 auch zur Beschichtung anderer Hochtemperaturbauteile einer Gasturbine, beispielsweise für Hitzeschildelemente einer Brennkammer.

In den folgenden Figuren wird die Prozeßführung hinsichtlich des Temperaturverlaufs nach einem herkömmlichen Verfahren (Figur 2) und nach dem erfindungsgemäßen Verfahren (Figur 3) einander gegenübergestellt und näher erläutert. Dabei wird zur Veranschaulichung mitunter auf Bezugszeichen der Figur 1 verwiesen.

Figur 2 zeigt ein Diagramm bei dem die Temperatur über die Zeit für ein Erzeugnis 12, insbesondere für eine Gasturbinenschaufel, gemäß einem herkömmlichen Beschichtungsverfahren aufgetragen ist. Auf der X-Achse des Diagramms ist die Zeit aufgetragen, auf der Y-Achse des Diagramms die Temperatur T, die das Erzeugnis 12 zu einer bestimmten Zeit t während des Verfahrens hat. Die Erzeugnistemperatur T als Funktion der Zeit t ist in dem Diagramm als Kurvenzug T₁(t) dargestellt. Das Erzeugnis 12 wird zunächst linear von Zimmertemperatur T_{R} auf eine Erzeugnistemperatur T, welches die Beschichtungstemperatur T_{C} ist, aufgeheizt. Während des Aufbringens der metallischen Schicht 13 auf das Erzeugnis 12 wird die Temperatur für die Beschichtungs-Prozeßdauer Δt_{C} auf der Beschichtungstemperatur T_{C} gehalten. Im Anschluß daran wird das Erzeugnis 12 von der Beschichtungstemperatur T_{C} auf Zimmertemperatur T_{R} abgekühlt. Danach wird das Erzeugnis 12 üblicherweise der Beschichtungskammer 3 entnommen, in geeigneter Weise zwischengelagert, und zu einem unbestimmten Zeitpunkt einer Wärmenachbehandlungskammer 5 zur Wärmenachbehandlung zugeführt. Die Wärmenachbehandlung des Erzeugnisses 12 findet demzufolge nicht unmittelbar nach dem Aufbringen der metallischen Schicht 13 statt. Um dies zu veranschaulichen ist in Figur 2 die Zeitachse t nach dem Abkühlen auf Zimmertemperatur T_{R} und vor Beginn der Wärmenachbehandlung unterbrochen. Hier handelt es sich also nicht um ein kontinuierliches Verfahren. Das Erzeugnis 12 wird endlich einer Wärmenachbehandlung unterzogen. Dazu wird das Erzeugnis 12 zunächst von Zimmertemperatur T_{R} (linear) auf eine Erzeugnistemperatur T aufgeheizt, welches die Wärmenachbehandlungstemperatur T_{H} ist. Diese ist größer als die Beschichtungstemperatur T_{C}. Da die Wärmenachbehandlung im allgemeinen eine längere Prozeßdauer aufweist als das Aufbringen der metallischen Schicht 13, ist die Wärmenachbehandlungs-Prozeßdauer Δt_{H}, während der sich das Erzeugnis auf der Wärmenachbehandlungstemperatur T_{H} befindet, entsprechend größer als die Beschichtungs-Prozeßdauer Δt_{C}. Zum Beispiel ist für eine Wärmenachbehandlung von Erzeugnissen 12, welche Gasturbinenschaufeln darstellen, die Wärmenachbehandlungs-Prozeßdauer Δt_{H} etwa viermal so groß wie die Beschichtungs-Prozeßdauer Δt_{C}. Nach der Wärmenachbehandlung wird das Erzeugnis 12 von der Wärmenachbehandlungstemperatur T_{H} wieder auf Zimmertemperatur T_{R} abgekühlt. Die Prozeßführung hinsichtlich des Temperaturverlaufs bei einem herkömmlichen Verfahren zeichnet sich dadurch aus, daß zwischen dem Aufbringen der metallischen Schicht 13 und der Wärmenachbehandlung das Erzeugnis 12 auf Zimmertemperatur T_{R} abgekühlt wird.

In Figur 3 ist ein Diagramm mit einem Temperaturverlauf für ein Erzeugnis 12, insbesondere für eine Gasturbinenschaufel, gemäß dem erfindungsgemäßen Verfahren dargestellt. Auf der X-Achse des Diagramms ist die Zeit t aufgetragen, während auf der Y-Achse des Diagramms die Erzeugnistemperatur T aufgetragen ist, die das Erzeugnis T zu einem bestimmten Zeitpunkt t hat. Die Erzeugnistemperatur T als Funktion der Zeit t ist durch den entsprechenden Kurvenzug T₂(t) im Diagramm veranschaulicht. Bei diesem Temperaturverlauf wird das Erzeugnis 12 zunächst linear von Zimmertemperatur T_{R} auf eine Erzeugnistemperatur T, welches die Beschichtungstemperatur T_{C} ist, aufgeheizt. Während des Aufbringens der metallischen Schicht 13 auf das Erzeugnis 12 wird die Temperatur für die Beschichtungs-Prozeßdauer Δt_{C} auf der Beschichtungstemperatur T_{C} gehalten. Für Erzeugnisse 12, die beispielsweise Gasturbinenschaufeln darstellen, welche mit einer MCrAlX-Schicht versehen werden, beträgt die Beschichtungstemperatur T_{C} etwa 1100 K bis 1200 K. Unmittelbar nach dem eigentlichen Beschichtungsvorgang wird das Erzeugnis 12 vom Beschichtungsbereich 9 in den Wärmenachbehandlungsbereich 10 kontinuierlich durch die Schleusenkammer 4 überführt, was eventuell - wie veranschaulicht - mit einer Änderung der Temperatur des Erzeugnisses 12, im allgemeinen mit einer Abnahme der Temperatur, verbunden ist. Der Temperaturverlauf in diesem Verfahrensschritt wird so ausgeführt, daß die mögliche Temperaturabnahme des Erzeugnisses 12 von der Beschichtungstemperatur T_{H} auf eine Mindesttemperatur Tₘᵢₙ beschränkt ist, die größer ist als Zimmertemperatur T_{R}. Bei Gasturbinenschaufeln ist die Mindesttemperatur Tₘᵢₙ dabei vorzugsweise größer als 500 K, insbesondere zwischen etwa 900 K bis 1400 K. Anschließend wird das Erzeugnis 12 zur Wärmenachbehandlung auf eine Erzeugnistemperatur T erwärmt, welches die Wärmenachbehandlungstemperatur T_{H} ist und die zum Beispiel für Gasturbinenschaufeln bei etwa 1200 K bis 1500 K liegt. Die Wärmenachbehandlung findet bei der Wärmenachbehandlungstemperatur T_{H} statt, auf der das Erzeugnis 12 für eine Wärmenachbehandlungs-Prozeßdauer Δt_{H} gehalten wird. Die Wärmenachbehandlungs-Prozeßdauer Δt_{H} ist größer als die Beschichtungs-Prozeßdauer Δt_{C}. Nach der Wärmenachbehandlung wird das Erzeugnis 12 von der Wärmenachbehandlungstemperatur T_{H} auf Zimmertemperatur T_{R} abgekühlt. Der zeitabhängige Temperaturverlauf des Erzeugnisses 12 gemäß diesem Verfahren weist einen kontinuierlichen Kurvenzug T₂(t) auf, der insbesondere den Plateaubereich mit der Beschichtungstemperatur T_{C} und den nachfolgenden Plateaubereich mit der Wärmenachbehandlungstemperatur T_{H} in kontrollierter Weise und stetig aneinander anschließt. Der Anschluß erfolgt dabei so, daß zu jeder Zeit eine Mindesttemperatur Tₘᵢₙ des Erzeugnisses 12 sichergestellt ist, wobei das Erzeugnis 12 ausdrücklich nicht auf Zimmertemperatur T_{R} abgekühlt und/oder der Atmosphäre ausgesetzt wird. Durch diese neue Prozeßführung hinsichtlich des Temperaturverlaufs wird es möglich, die Anbindung der metallischen Schicht 13 an den Grundwerkstoff des Erzeugnisses 12 in der Wärmenachbehandlung deutlich zu verbessern. Das Erzeugnis 12 ist mit seiner Umgebung hierbei stets nahe an einem thermodynamischen Gleichgewichtszustand. Zeitliche wie räumliche Temperaturgradienten, insbesondere schädliche Temperaturschocks infolge Abkühlen auf Zimmertemperatur T_{R}, werden vermieden, was sich sehr vorteilhaft auf die Qualität der metallischen Schicht auswirkt.

## Patentansprüche

1. Verfahren zur Beschichtung einer Gasturbinenschaufel (12) mit einer metallischen Oxidationsschutzschicht (13), in einer Vakuumanlage (1), bei dem
(a) die Gasturbinenschaufel (12) in die Vakuumanlage (1) eingeführt und von Zimmertemperatur (T_{R}) auf eine Erzeugnistemperatur (T) geheizt,
(b) die metallische Oxidationsschicht (13) auf die Gasturbinenschaufel (12) in einem Beschichtungsbereich (9) aufgebracht, und
(c) die beschichtete Gasturbinenschaufel (12) einer Wärmenachbehandlung in einem Wärmebehandlungsbereich (10) unterzogen wird,
**dadurch gekennzeichnet,**
**dass** die Wärmenachbehandlung sich an das Aufbringen der Schicht (13) so anschließt, dass die Temperatur der Gasturbinenschaufel (12) nach dem Aufbringen der Schicht (13) und vor der Wärmenachbehandlung mindestens so groß wie eine Mindesttemperatur (Tₘᵢₙ) ist,
wobei die Mindesttemperatur (Tₘᵢₙ) größer als Zimmertemperatur (T_{R}) ist, und
**dass** die beschichtete Gasturbinenschaufel (12) in einem Zwischenschritt innerhalb der Vakuumanlage (1) von dem Beschichtungsbereich (9) in den Wärmenachbehandlungsbereich (10) überführt wird.

2. Verfahren nach Anspruch 1
**dadurch gekennzeichnet,**
**dass** die beschichtete Gasturbinenschaufel (12) in dem Zwischenschritt auf einer Temperatur größer als die Mindesttemperatur (Tₘᵢₙ) gehalten wird.

3. Verfahren nach Anspruch 1 oder 2,
**dadurch gekennzeichnet,**
**dass** die Mindesttemperatur (Tₘᵢₙ) etwa 500 K, insbesondere etwa 900 K bis 1400 K, beträgt.

4. Verfahren nach Anspruch 1,
**dadurch gekennzeichnet,**
**dass** das Aufbringen der metallischen Schicht (13) auf die Gasturbinenschaufel (12) in einem Beschichtungsbereich (9) und die Wärmenachbehandlung in einem Wärmenachbehandlungsbereich (10) erfolgen, wobei der Beschichtungsbereich (9) und der Wärmenachbehandlungsbereich (10) verschiedene Bereiche der Vakuumanlage (1) sind.

5. Verfahren nach Anspruch 4,
**dadurch gekennzeichnet,**
**dass** die beschichtete Gasturbinenschaufel (12) automatisch vom Beschichtungsbereich (9) in den Wärmenachbehandlungsbereich (13) überführt wird.

6. Verfahren nach Anspruch 1, 4 oder 5,
**dadurch gekennzeichnet,**
**dass** die wärmenachbehandelte Gasturbinenschaufel (12) gesteuert auf Zimmertemperatur (T_{R}) abgekühlt wird.

7. Verfahren nach einem der Ansprüche 4, 5 oder 6,
**dadurch gekennzeichnet,**
**dass** sich eine erste Anzahl von Gasturbinenschaufeln (12) im Beschichtungsbereich (9) und simultan eine zweite Anzahl von Gasturbinenschaufeln (12) im Wärmenachbehandlungsbereich (10) befinden, wobei die zweite Anzahl größer als die erste Anzahl ist.

8. Verfahren nach einem der vorhergehenden Ansprüche,
**dadurch gekennzeichnet,**
**dass** als Grundwerkstoff für die Gasturbinenschaufel (12) eine Nickel-, oder Eisen- oder Kobaltbasis-Superlegierung verwendet wird.

9. Verfahren nach einem der vorhergehenden Ansprüche,
**dadurch gekennzeichnet,**
**dass** als metallische Schicht (13) eine MCrAlX Legierung verwendet wird, wobei M für eines oder mehrere Elemente der Gruppe umfassend Eisen, Kobalt und Nickel, Cr für Chrom, Al für Aluminium sowie X für eines oder mehrere Elemente der Gruppe umfassend Yttrium, Rhenium sowie die Elemente der Seltenen Erden stehen.

10. Einrichtung zur Beschichtung einer Gasturbinenschaufel (12) mit einer metallischen Oxidationsschutzschicht (13) in einer Vakuumanlage (1), umfassend eine Beschichtungskammer (3) und eine Wärmenachbehandlungskammer (5),
**dadurch gekennzeichnet,**
**dass** die Wärmenachbehandlungskammer (5) mit der Beschichtungskammer (3) vakuumdicht verbunden ist.

11. Einrichtung nach Anspruch 10,
**dadurch gekennzeichnet,**
**dass** in der Wärmenachbehandlungskammer (5) eine Beheizungseinrichtung (7A) vorgesehen ist.

12. Einrichtung nach Anspruch 10 oder 11,
**dadurch gekennzeichnet,**
**dass** eine Vorheizkammer (2) vorgesehen ist, die der Beschichtungskammer (3) vorgeordnet und mit dieser vakuumdicht verbunden ist.

13. Einrichtung nach Anspruch 10, 11, oder 12,
**dadurch gekennzeichnet,**
**dass** eine Abkühlkammer (6) vorgesehen ist, die der Wärmenachbehandlungskammer (5) nachgeordnet und mit dieser vakuumdicht verbunden ist.

14. Einrichtung nach Anspruch 10, 11, 12 oder 13
**dadurch gekennzeichnet,**
**dass** die vakuumdichte Verbindung zwischen der Beschichtungskammer (3) und der Wärmenachbehandlungskammer (5) über eine Schleusenkammer (4) hergestellt ist.

15. Einrichtung nach Anspruch 14,
**dadurch gekennzeichnet,**
**dass** in der Schleusenkammer (4) eine Beheizungseinrichtung (7) vorgesehen ist.

16. Einrichtung nach einem der Ansprüche 10 bis 15,
**dadurch gekennzeichnet,**
**dass** ein Transfersystem (8, 11) zur automatischen Überführung der Gasturbinenschaufel (12) von einer Vakuumkammer (2, 3, 4, 5, 6) in eine andere Vakuumkammer (2, 3, 4, 5, 6) der Vakuumanlage (1) vorgesehen ist.

17. Einrichtung nach einem der Ansprüche 10 bis 16,
**dadurch gekennzeichnet,**
**dass** die Beschichtungskammer (3) eine erste Aufnahmekapazität und die Wärmenachbehandlungskammer (5) eine zweite Aufnahmekapazität für Gasturbinenschaufeln (12) aufweist, wobei die zweite Aufnahmekapazität größer als die erste Aufnahmekapazität ist.

## Claims

1. Method of coating a gas turbine blade (12) with a metallic anti-oxidation coating (13) in a vacuum plant (1), in which method
(a) the gas turbine blade (12) is fed into the vacuum plant (1) and heated from room temperature (T_{R}) to a gas turbine blade temperature (T),
(b) the metallic oxidation coating (13) is applied to the gas turbine blade (12) in a coating region (9), and
(c) the coated gas turbine blade (12) is subjected to a postheat treatment in a heat treatment region (10),
**characterized in that** the postheat treatment follows the application of the coating (13) in such a way that the temperature of the gas turbine blade (12) after the application of the coating (13) and before the postheat treatment is at least as high as a minimum temperature (Tₘᵢₙ), the minimum temperature (Tₘᵢₙ) being higher than room temperature (T_{R}), and **in that** the coated gas turbine blade (12), in an intermediate step within the vacuum plant (1), is transferred from the coating region (9) into the postheat treatment region (10).

2. Method according to Claim 1, **characterized in that** the coated gas turbine blade (12), in the intermediate step, is kept at a temperature higher than the minimum temperature (Tₘᵢₙ).

3. Method according to Claim 1 or 2, **characterized in that** the minimum temperature (Tₘᵢₙ) is about 500 K, in particular about 900 K to 1400 K.

4. Method according to Claim 1, **characterized in that** the application of the metallic coating (13) to the gas turbine blade (12) is effected in a coating region (9) and the postheat treatment is effected in a postheat treatment region (10), the coating region (9) and the postheat treatment region (10) being different regions of the vacuum plant (1).

5. Method according to Claim 4, **characterized in that** the coated gas turbine blade (12) is transferred automatically from the coating region (9) into the postheat treatment region (13).

6. Method according to Claim 1, 4 or 5, **characterized in that** the gas turbine blade (12) subjected to postheat treatment is cooled down to room temperature (T_{R}) in a controlled manner.

7. Method according to one of Claims 4, 5 or 6, **characterized in that** a first number of gas turbine blades (12) is located in the coating region (9) and simultaneously a second number of gas turbine blades (12) is located in the postheat treatment region (10), the second number being larger than the first number.

8. Method according to one of the preceding claims, **characterized in that** the parent material used for the gas turbine blade (12) is a nickel- or iron- or cobalt-base superalloy.

9. Method according to one of the preceding claims, **characterized in that** the metallic coating (13) used is an MCrAlX alloy, where M stands for one or more elements of the group comprising iron, cobalt and nickel, Cr stands for chromium, Al stands for aluminium, and X stands for one or more elements of the group comprising yttrium, rhenium and the elements of the rare earths.

10. Apparatus for coating a gas turbine blade (12) with a metallic anti-oxidation coating (13) in a vacuum plant (1), comprising a coating chamber (3) and a postheat treatment chamber (5), **characterized in that** the postheat treatment chamber (5) is connected to the coating chamber (3) in a vacuum-tight manner.

11. Apparatus according to Claim 10, **characterized in that** a heating device (7A) is provided in the postheat treatment chamber (5).

12. Apparatus according to Claim 10 or 11, **characterized in that** a preheating chamber (2) is provided, this preheating chamber (2) being arranged upstream of the coating chamber (3) and being connected to the latter in a vacuum-tight manner.

13. Apparatus according to Claim 10, 11 or 12, **characterized in that** a cooling chamber (6) is provided, this cooling chamber (6) being arranged downstream of the postheat treatment chamber (5) and being connected to the latter in a vacuum-tight manner.

14. Apparatus according to Claim 10, 11, 12 or 13, **characterized in that** the vacuum-tight connection between the coating chamber (3) and the postheat treatment chamber (5) is produced via a lock chamber (4).

15. Apparatus according to Claim 14, **characterized in that** a heating device (7) is provided in the lock chamber (4).

16. Apparatus according to one of Claims 10 to 15, **characterized in that** a transfer system (8, 11) is provided for the automatic transfer of the gas turbine blade (12) from a vacuum chamber (2, 3, 4, 5, 6) into another vacuum chamber (2, 3, 4, 5, 6) of the vacuum plant (1).

17. Apparatus according to one of Claims 10 to 16, **characterized in that** the coating chamber (3) has a first receiving capacity and the postheat treatment chamber (5) has a second receiving capacity for gas turbine blades (12), the second receiving capacity being greater than the first receiving capacity.

## Revendications

1. Procédé de revêtement d'une aube (12) de turbine à gaz d'une couche (13) métallique de protection vis à vis de l'oxydation dans une installation (1) sous vide dans lequel,
a) on introduit l'aube (12) de turbine à gaz dans l'installation (1) sous vide et on la porte de la température T_{R} ambiante à une température T de production,
b) on dépose la couche (13) métallique de protection vis-à-vis de l'oxydation sur l'aube (12) de turbine à gaz dans une zone (9) de revêtement,
c) on soumet l'aube (12) de turbine à gaz revêtue à un post-traitement thermique dans une zone (10) de traitement thermique,
**caractérisé,**
**en ce que** le post-traitement thermique fait suite au dépôt de la couche (13) de façon à ce que la température de l'aube (12) de turbine à gaz soit, avant le dépôt de la couche (13) et après le post-traitement thermique, au moins aussi élevée qu'une température Tₘᵢₙ minimum,
la température Tₘᵢₙ minimum étant supérieure à la température T_{R} ambiante, et en ce que l'on transfère l'aube (12) revêtue de turbine à gaz dans un stade intermédiaire dans l'installation (1) sous vide de la zone (9) de revêtement à la zone (10) de post-traitement thermique.

2. Procédé suivant la revendication 1,
**caractérisé,**
**en ce que** l'on maintient l'aube (12) revêtue de turbine à gaz dans le stade intermédiaire à une température supérieure à la température Tₘᵢₙ minimum.

3. Procédé de revêtement suivant la revendication 1 ou 2, **caractérisé en ce que** la température Tₘᵢₙ minimum est d'environ 500 K, notamment d'environ 900 K à 14 00 K.

4. Procédé de revêtement suivant la revendication 1, **caractérisé en ce que** l'on effectue le dépôt de la couche métallique sur l'aube (12) de turbine à gaz dans une zone (9) de revêtement et le post-traitement thermique dans une zone (10) de post-traitement thermique, la zone (9) de revêtement et la zone (10) de post-traitement thermique étant des zones différentes de l'installation (1) sous vide.

5. Procédé de revêtement suivant la revendication 4, **caractérisé en ce que** l'on transfert l'aube (12) revêtue de turbine à gaz automatiquement de la zone (9) de revêtement à la zone (10) de post-traitement thermique.

6. Procédé de revêtement suivant la revendication 1, 4 ou 5, **caractérisé en ce que** l'on refroidit de manière réglée jusqu'à la température T_{R} ambiante l'aube (12) de turbine à gaz qui a été post-traitée thermiquement.

7. Procédé de revêtement suivant l'une des revendications 4, 5 ou 6, **caractérisé en ce qu'**un premier nombre d'aubes (12) de turbine à gaz se trouve dans la zone (9) de revêtement et simultanément un deuxième nombre d'aubes (12) de turbine à gaz se trouve dans la zone (10) de post-traitement thermique, le deuxième nombre étant plus grand que le premier nombre.

8. Procédé de revêtement suivant l'une des revendications précédentes, **caractérisé en ce que** l'on utilise comme matériau de base pour l'aube (12) de turbine à gaz un super alliage à base de nickel ou à base de fer ou à base de cobalt.

9. Procédé de revêtement suivant l'une des revendications précédentes, **caractérisé en ce que** l'on utilise comme couche (13) métallique un alliage en MCrALX, M étant un ou plusieurs éléments du groupe comprenant le fer, le cobalt et le nickel, Cr représentant le chrome, Al l'aluminium et X un ou plusieurs éléments du groupe comprenant l'yttrium, le rhénium, ainsi que les éléments des terres rares.

10. Dispositif de revêtement d'une aube (12) de turbine à gaz, d'une couche (13) métallique de protection vis-à-vis de l'oxydation dans une installation (11) sous vide, comprenant une chambre (3) de revêtement et une chambre (5) de post-traitement thermique,
**caractérisé,**
**en ce que** la chambre (5) de post-traitement thermique communique d'une manière étanche au vide avec la chambre (3) de revêtement.

11. Dispositif de revêtement suivant la revendication 10, **caractérisé en ce qu'**un dispositif (7A) de chauffage est prévu dans la chambre (5) de post-traitement thermique.

12. Procédé de revêtement suivant la revendication 10 ou 11, **caractérisé en ce qu'**il prévu une chambre (2) de pré-chauffage qui est placée en amont de la chambre (3) de revêtement et qui communique avec celle-ci d'une manière étanche au vide.

13. Procédé de revêtement suivant la revendication 10, 11 ou 12, **caractérisé en ce qu'**il est prévu une chambre (6) de refroidissement, qui est placée en aval de la chambre (5) de post-traitement thermique et qui communique avec celle-ci d'une manière étanche au vide.

14. Procédé de revêtement suivant la revendication 10, 11, 12 ou 13, **caractérisé en ce que** la communication étanche au vide entre la chambre (13) de revêtement et la chambre (5) de post-traitement thermique est ménagée par une chambre (4) à sas.

15. Procédé de revêtement suivant la revendication 14, **caractérisé en ce qu'**un dispositif (7) de chauffage est prévu dans la chambre (4) à sas.

16. Procédé de revêtement suivant l'une des revendications 10 à 15, **caractérisé en ce qu'**il est prévu un système (8, 11) de transfert pour le transfert automatique de l'aube (12) de turbine à gaz d'une chambre (2, 3, 4, 5, 6) sous vide à une autre chambre (2, 3, 4, 5, 6) sous vide de l'installation (1) sous vide.

17. Procédé de revêtement suivant l'une des revendications 10 à 16, **caractérisé en ce que** la chambre (3) de revêtement comporte une première capacité de réception d'aubes (12) de turbine à gaz et la chambre (5) de post-traitement thermique une deuxième capacité de réception d'aubes (12) de turbine à gaz, la deuxième capacité de réception étant plus grande que la première capacité de réception.
